# FASCICULE DE BREVET EUROPEEN

(11) **EP 0 440 705 B1**
(45) Date de publication et mention de la délivrance du brevet: **08.03.1995**
(21) Numéro de dépôt: 89912107.3
(22) Date de dépôt: 20.10.1989
(51) Int. Cl.: G02B 21/26, G02B 21/34

(54) **PLATINE POUR L'ANALYSE RAPIDE ET INDEXEE SOUS MICROSCOPE DE FILTRES ET D'AUTRES SUPPORTS PORTEURS D'ECHANTILLONS MULTIPLES ET PROCEDE D'ANALYSE DE CES ECHANTILLONS UTILISANT CETTE PLATINE**
PLATINE ZUR SCHNELLEN ANALYSE UND INDEXIERUNG VON FILTERN UND ANDEREN OBJEKTTRÄGERN UNTER EINEM MIKROSKOP MIT ZUGEHÖRIGEN ANALYSEVERFAHREN
STAGE FOR THE RAPID AND INDEXED ANALYSIS WITH A MICROSCOPE OF FILTERS AND OTHERS SUPPORTS CARRYING MULTIPLE SAMPLES, AND METHOD FOR ANALYZING SUCH SAMPLS BY USING SAID STAGE

(30) Priorité: 21.10.1988 FR 8813805
(43) Date de publication de la demande: 14.08.1991
(73) Titulaire: BIOCOM, F-91942 Les Ulis Cédex (FR)
(72) Inventeur: BISCONTE, Jean-Claude, F-91640 Briis-sous-Forges (FR)
(74) Mandataire: Ores, Irène
(86) Numéro de dépôt international: FR8900545
(87) Numéro de publication internationale: WO9004802

(56) Documents cités:
- EP-A- 0 229 581
- DE-A- 3 427 213
- DE-A- 3 705 166
- FR-A- 2 565 350
- GB-A- 1 297 880
- GB-A- 2 141 254
- US-A- 3 549 232
- US-A- 3 731 377
- US-A- 3 826 558

## Description

La présente invention est relative à une platine de fixation de supports poreux (filtres) ou non poreux, souples ou rigides, porteurs d'échantillons multiples, biologiques ou non, ainsi qu'à un procédé d'analyse de ces échantillons utilisant la platine précitée. Cette dernière peut être placée sous microscope optique, et constituer une surplatine, ou remplacer la platine traditionnelle. La platine selon l'invention est particulièrement appropriée pour l'analyse rapide d'échantillons, notamment en recourant à l'analyse d'image automatique par ordinateur.

Il faut rappeler qu'en microscopie l'objet repose sur une lame de verre et que, en général, il est recouvert d'une lamelle couvre-objet. Dans le cas de l'analyse bactérienne sur filtre il y a évidemment ce support supplémentaire, étant donné que le montage d'un filtre entre lame et lamelle est la seule technique possible, actuellement connue, pour obtenir une planéité correcte du filtre.

Classiquement une platine de microscope comprend un plan de fixation qui est fixé sur une crémaillère de mise au point. Ce plan de platine se déplace en Y et un étau, mobile en X, vient prendre la lame. Celle-ci est appliquée sur la platine et on applique latéralement un mors à ressort. Pratiquement ce système présente 2 défauts:
1) il arrive que la lame de verre soit légèrement "en coin" par rapport au plan de platine ;
2) la contrainte latérale exercée par le ressort peut légèrement incurver la lame.

A fort grossissement, et lors de l'exploitation en X et Y, il est ainsi obligatoire de retoucher en permanence la mise au point, à tel point que le microscopiste travaille en général avec une main constamment active sur la vis micrométrique.

L'usage de plus en plus répandu d'ordinateurs d'analyse d'image couplés à un microscope a conduit à l'usage de platines X-Y pilotées par moteurs pas à pas. Sur les modèles les plus évolués une surplatine spéciale contraint mieux la lame.

Que ce soit pour l'analyse traditionnelle ou l'analyse d'image automatique, il existe une lame de verre (75 x 25 x 1,2 mm pour le modèle le plus courant) qui ne peut avoir une planéité parfaite, compte-tenu de sa minceur (1,2 mm) et de sa longueur (75 mm) importantes. Par ailleurs, il s'agit d'un objet consommable, peu coûteux, et auquel on ne demande pas de propriétés optiques très particulières.

Notons que cette minceur de la lame est voulue pour des raisons optiques. En effet, dans les applications classiques de la microscopie la lumière arrive par dessous (lumière transmise) au travers d'un condenseur Pour que l'éclairage soit intense et homogène, il faudrait que le condenseur s'approche autant de l'objet que l'objectif.

Ceci n'est pas possible à très fort grossissement. En effet, à l'objectif 100 fois (ce qui correspond à 2000 au total) la distance frontale entre l'objectif et l'objet est de l'ordre de 0,2 mm (ce qui laisse tout juste la place pour la lamelle couvre-objet).

Bien entendu, dans le cas de la microscopie en épifluorescence, il n'est plus besoin de condenseur puisque l'éclairage arrive par l'objectif.

Dans le cas de filtres, le montage d'un filtre entre lame et lamelle est la seule technique possible pour obtenir une planéité correcte du filtre.

La filtration est de plus en plus utilisée pour l'analyse de particules contenues dans les gaz et les liquides. Ces particules sont de nature variée, biologique, minérale, métallique, etc... Un exemple en est la sépara-tion et le dénombrement des bactéries dans le lait (à l'aide de filtres connus sous les noms de marques de fabrique "NUCLEOPORE", "MULLIPORE", etc...).

Il y a aussi lieu de rappeler qu'on a besoin d'un milieu liquide de montage constitué, soit par une huile, soit par un milieu visqueux (baume du Canada), soit encore par un milieu durcissant avec le temps.

Les manipulations correspondantes sont relativement délicates et peu compatibles avec des notions de débit d'analyse élevé.

Par ailleurs, il est très difficile d'obtenir une planéité parfaite de la préparation. Le filtre ne peut être appliqué parfaitement et les différences d'épaisseur inévitables du liquide de montage précité font que la lamelle couvre-objet est elle-même déformée (ce qui n'est pas très grave si de l'huile à immersion est interposée entre l'objectif et la lamelle).

Il y a lieu donc de noter que, par principe, le filtre ne peut être simplement posé sur la lame de verre traditionnelle pour une observation directe à sec. Ses ondulations seraient trop importantes. Pourtant, les avantages d'une telle observation seraient immenses en terme de simplicité et de rapidité.

Ainsi, on peut constater que l'analyse d'image automatique -qui a des performances élevées- voit celles-ci annulées en partie par l'inadéquation des méthodes de préparation et d'observation de l'échantillon. JC. BISCONTE a d'ailleurs posé une méthode utilisant des films transparents pour l'observation en continu par analyse d'image (cf le brevet FR-2 565 350 et celui issu de la demande de brevet Euro-PCT WO 85/05563).

Pour chaque lame, il faudra initialiser l'analyseur d'image, en particulier pour vérifier le focus.

Ce problème de focus est, en effet, le point le plus délicat dans l'analyse de petites particules et en particulier pour l'analyse de bactéries.

A ce sujet il y a lieu de rappeler qu'une bactérie mesure parfois moins d'un micron et que, dans les conditions d'observation maximales, la profondeur de champ est de l'ordre du demi-micron. Ainsi, il suffit d'un défaut de planéité de l'ordre d'un micron pour que les bactéries deviennent totalement floues, donc non analysables automa-tiquement.

La recherche automatique du meilleur focus est possible par analyse d'image, mais il s'agit d'un procédé qui consomme du temps. Il faut, en effet, tester de 3 à 10 positions de la hauteur de la platine (par incréments de 0,25 micron) pour trouver le meilleur réglage (meilleure netteté des objets observés).

Si la surface du filtre connaît des fluctuations importantes de planéité, par exemple de l'ordre de 50 microns, le dispositif d'analyse d'image aura, face à un champ vide, à résoudre la question de savoir s'il s'agit réellement d'un champ sans bactérie ou d'un champ pour lequel le focus est très loin. Pour un tel champ passer de 10 à 20 secondes est normal !...

Or, il n'est pas possible de "sauter" de tels champs sous peine de fausser totalement les résultats.

La Demande de Brevet GB-2 141 254 (MILES) décrit un dispositif permettant de maintenir un objet à observer de façon stable en position sur une fenêtre d'observation. A cet effet, il comporte en combinaison :
- une plaque ayant des faces principales parallèles entre elles et une fenêtre d'observation optique en matériau transparent disposée centralement dans une ouverture traversante ménagée dans toute son épaisseur,
- un espace annulaire d'aspiration entourant la fenêtre d'observation optique, et
- une conduite de liaison entre l'espace annulaire d'aspiration et une source de création de vide (dépression).

De façon plus précise, MILES vise essentiellement à remplacer le porte-lame classique d'un microscope, qui est inadéquat pour supporter un film souple, ainsi qu'à éviter de toucher la face principale supérieure du film de manière à empêcher toute contamination ou rayure de celle-ci, en sorte que MILES est à considérer comme constituant l'arrière-plan technologique de la présente invention, tout en illustrant l'état de la technique le plus proche de celle-ci.

La présente invention s'est donc donné pour but de pourvoir à une platine de fixation de supports poreux (filtres) ou non poreux, souples ou rigides, porteurs d'échantillons, biologiques ou non, qui répond mieux aux nécessités de la pratique que la platine classique, notamment en ce que :
1) elle permet d'obtenir une planéité parfaite du support à analyser ;
2) elle est particulièrement adaptée à la fixation rapide et indexée automatiquement pour l'analyse plus facile d'un ou plusieurs échantillons (disposés sur le même support et toujours présentés de la même façon en X, Y et Z) en vue d'une analyse d'image automatique, par ordinateur, ou d'une analyse manuelle ;
3) elle se prête également à une recherche automatique du meilleur focus ;
4) elle est compatible avec l'observation en épi-fluorescence ainsi qu'avec l'observation en transmission ;
5) elle autorise une observation directe du support, à savoir sans lamelle couvre-objet, ce qui permet d'utiliser des objectifs de microscope à très courte distance focale, qui présentent de meilleures performances;
6) elle est compatible avec l'observation à sec ou avec de l'huile à immersion ;
7) tout en étant spécialement adaptée à la microscopie optique, elle peut s'appliquer aussi à la microscopie électronique ou à d'autres moyens d'observation.

Une application préférentielle de la platine selon l'invention est constituée par le comptage bactérien sur filtres micro-poreux type "NUCLEOPORE".

L'invention a principalement pour objet une platine de fixation d'au moins un support, poreux ou non, souple ou rigide, porteur d'un ou plusieurs échantillons, biologiques ou non, à observer et à analyser à l'aide d'un microscope, cette platine comportant un évidement destiné à recevoir une plaque d'appui du support, et donc d'observation des échantillons portés par celui-ci, ainsi que des moyens de placage par aspiration du support sur la plaque d'appui, laquelle platine est caractérisée en ce qu'elle comporte en outre des moyens d'indexation automatique du support, et donc desdits échantillons à analyser, destiné à coopérer avec un badge qui comporte une ouverture correspondant à l'évidement de la platine ainsi que des moyens permettant le centrage -à savoir l'indexation en position- du badge sur la platine, ledit support étant destiné à être fixé à une des faces principales du badge sur une zone annulaire de celui-ci délimitant l'ouverture précitée.

L'invention a également pour objet une platine, caractérisée en ce que les moyens d'indexation en position du badge comportent au moins deux perforations destinées à recevoir deux plots de centrage correspondants portés par la platine.

L'invention a également pour objet une platine, caractérisée en ce que lesdits moyens de placage du support sur la plaque d'observation comprennent, en combinaison :
- un espace annulaire étanche ménagé au moins autour de la plaque et délimité entre cette plaque, la platine et au moins une portion périphérique annulaire du support dépassant l'encombrement de la plaque ;
- un dispositif d'attraction d'au moins ladite zone périphérique du support à analyser par création d'un champ électromagnétique susceptible d'aimanter au moins ladite portion périphérique annulaire du support, qui est notamment équipée de ou réalisée en une bande annulaire en matériau ferromagnétique.

L'invention a également pour objet une platine, caractérisée en ce que les moyens de placage du support comprennent :
- un dispositif d'aspiration d'au moins une zone périphérique annulaire du support à analyser par création de vide, qui est en communication avec ladite zone périphérique du support, la plaque d'observation étant poreuse dans au moins une portion correspondant à cette zone périphérique, ladite zone périphérique du support étant appliquée sur la plaque d'observation.

L'invention a également pour objet une platine comportant des moyens de placage du support sur la plaque d'appui qui comprennent, en combinaison :
- un espace annulaire étanche ménagé au moins autour de la plaque et délimité entre cette plaque, la platine et au moins une portion périphérique annulaire du support dépassant l'encombrement de la plaque,
- un dispositif d'aspiration d'au moins ladite portion périphérique annulaire du support à analyser, par création de vide,
- au moins un canal étanche, ménagé dans la platine et mettant en communication l'espace étanche d'aspiration avec le dispositif de création de vide, caractérisée en ce que la plaque est fixée à une extrémité radialement interne d'un siège annulaire faisant saillie d'une portion de paroi délimitant l'évidement de la platine, la face d'observation de la plaque sur laquelle prend appui le support étant sensiblement au même niveau que la face supérieure de la platine, lorsque cette plaque est disposée dans l'évidement précité, ladite plaque présentant une portion de surface radialement externe espacée de la paroi de l'évidement par ledit siège, en sorte que l'espace étanche d'aspiration est délimité entre : cette portion de surface radialement externe de la plaque, une portion de surface du siège de fixation de la plaque, ladite portion de paroi délimitant l'évidement de la platine et ladite portion périphérique annulaire du support couvrant de façon étanche l'espace séparant la plaque de la paroi de l'évidement de la platine, le canal reliant l'espace étanche d'aspiration d'au moins la portion périphérique annulaire du support au dispositif de création de vide étant constitué par au moins une rainure borgne, qui est ménagée dans la platine et qui comporte un siège d'application d'une plaquette d'obturation étanche pourvue d'un orifice d'aspiration destiné à être raccordé au dispositif de création de vide précité.

L'invention a également pour objet une platine, caractérisée en ce que la plaque est fixée à une extrémité radialement interne d'un siège annulaire faisant saillie d'une portion de paroi délimitant l'évidement de la platine, la face d'observation de la plaque sur laquelle prend appui le support étant sensiblement au même niveau que la face supérieure de la platine, lorsque cette plaque est disposée dans l'évidement précité, ladite plaque présentant une portion de surface radialement externe espacée de la paroi de l'évidement par ledit siège, en sorte que l'espace étanche d'aspiration est délimité entre : cette portion de surface radialement externe de la plaque, une portion de surface du siège de fixation de la plaque, ladite portion de paroi délimitant l'évidement de la platine et ladite portion périphérique annulaire du support couvrant de façon étanche l'espace séparant la plaque de la paroi de l'évidement de la platine, le canal reliant l'espace étanche d'aspiration d'au moins la portion périphérique annulaire du support au dispositif de création de vide étant constitué par au moins une rainure borgne, qui est ménagée dans la platine et qui comporte un siège d'application d'une plaquette d'obturation étanche pourvue d'un orifice d'aspiration destiné à être raccordé au dispositif d'aspiration précité.

L'invention a également pour objet une platine, caractérisée en ce que la plaque d'appui comporte sur sa surface d'observation des micro-cannelures disposées de façon à former un quadrillage de distribution -également à la face inférieure du support- de la dépression créée dans l'espace d'aspiration précité, autour de chacun des micro-carrés (ou micro-pavés) du support, dans lesquels la face d'observation (à savoir, la face principale supérieure) de la plaque d'appui est subdivisée par le quadrillage de micro-cannelures, assurant ainsi, lors de l'aspiration, un encore meilleur placage du support.

L'invention a également pour objet une platine, caractérisée en ce qu'elle se présente sous la forme d'une cuvette.

L'invention a également pour objet une platine, caractérisée en ce que la cuvette est sensiblement rectangulaire et est délimitée par des nervures transversales et longitudinales, et en ce que les nervures transversales sont équipées d'ailettes de renforcement permettant également de faire coopérer la platine avec des moyens de fixation de celle-ci sur un plan d'appui.

L'invention a également pour objet une platine, caractérisée en ce que la plaque d'observation est réalisée en un matériau choisi dans le groupe comprenant des matériaux en verre, en métal ou en matière plastique.

L'invention a également pour objet une platine de fixation, caractérisée en ce que les moyens de placage par aspiration comprennent un film étanche, qui est pourvu d'une fenêtre d'observation centrale, destinée à être centrée par rapport à l'évidement précité de la platine, tout en étant plus petite que cet évidement, ladite lame d'observation étant fixée sur une zone annulaire du film qui délimite centralement la fenêtre d'observation de celui-ci, en sorte que la lame précitée est plaquée contre la platine lors de l'application de l'aspiration.

L'invention a également pour objet l'utilisation de la platine, comme surplatine destinée à être montée sur une platine de microscope, classique ou non.

L'invention a également pour objet l'utilisation de la platine en remplacement d'une platine de microscope, classique ou non.

L'invention a également pour objet un microscope équipé d'une platine selon l'invention.

L'invention a également pour objet un microscope, caractérisé en ce qu'il coopère avec un système de focalisation automatique par analyse vidéo d'image, piloté par ordinateur.

Outre les dispositions qui précèdent, l'invention comprend encore d'autres dispositions, qui ressortiront de la description qui va suivre.

L'invention sera mieux comprise à l'aide du complément de description qui va suivre, qui se réfère aux dessins annexés dans lesquels :
La figure 1 est une vue de dessus de la platine selon l'invention,
la figure 2 est une vue en coupe suivant II de la platine illustrée à la figure 1,
la figure 3 illustre à plus grande échelle un détail de la figure 2 concernant l'évidement de la platine, qui est destiné à recevoir une plaque d'appui d'un support d'échantillons à analyser, de manière à apprécier la disposition de l'espace dans lequel on crée le vide nécessaire au placage par aspiration du support appliqué sur la plaque,
la figure 4 illustre à plus grande échelle et en coupe une rainure d'aspiration, borgne à une extrémité, mettant en communication cet espace d'aspiration, par l'intermédiaire d'un orifice, (ménagé dans la plaquette de la figure 5), avec un dispositif d'aspiration,
la figure 5 illustre une vue de dessus d'une plaquette d'obturation étanche de la rainure visible sur les figures 1 et 4, transformant cette dernière en un canal étanche d'aspiration,
la figure 6 montre une vue de dessus d'une variante de réalisation de la plaque illustrée à la figure 3,
la figure 7 est une vue en coupe diamétrale, suivant Vii, de la plaque illustrée à la figure 6,
les figures 8 et 9 sont des vues de dessus et de dessous, respectivement, d'un badge porte-support destiné à coopérer, le cas échéant, avec la platine selon l'invention.

Il doit être bien entendu, toutefois, que ces dessins, et les parties descriptives correspondantes, sont donnés uniquement à titre d'illustration de l'objet de l'invention, dont ils ne constituent en aucune manière une limitation.

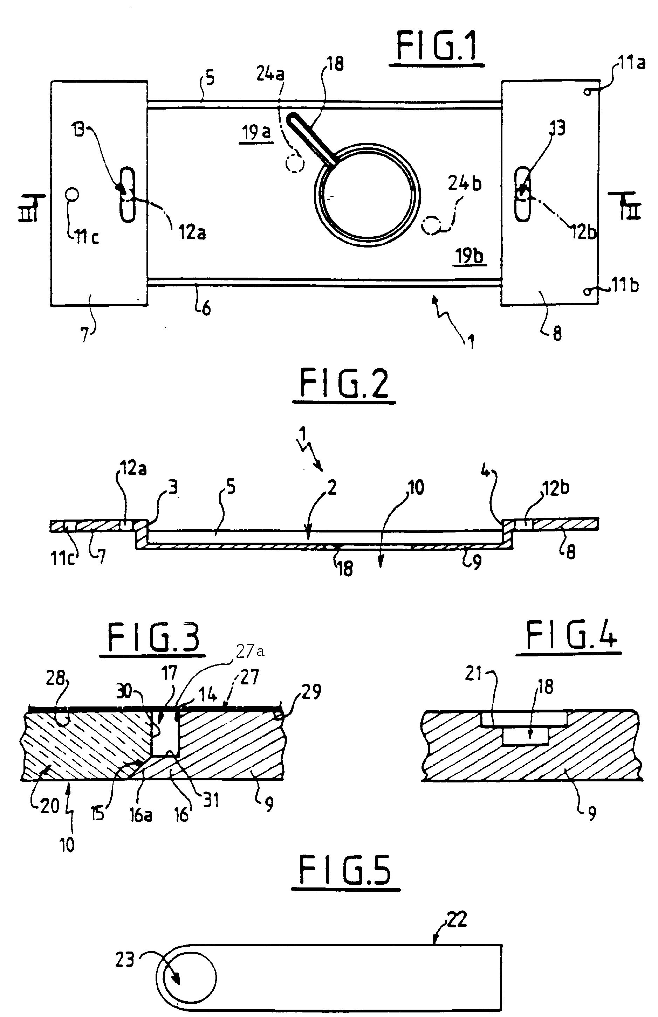

La platine 1, conforme à l'invention, telle qu'illustrée aux figures 1 et 2, est de forme rectangulaire et est réalisée à partir d'un alliage léger. Une plaque en cet alliage est usinée dans sa masse de manière à ménager une sorte de cuvette 2 à la partie supérieure délimitée par deux épaulements (ou nervures) transversaux(les) 3 et 4 et deux nervures longitudinales 5 et 6. La configuration sous forme de cuvette permet d'éviter les épanchements de liquide dans le cas d'observation à immersion. La platine 1 est peut être utilisée comme une surplatine destinée à être disposée sur une platine classique de microscope ou à la place de cette dernière.

Les nervures 3 et 4 dépassent en hauteur et en longueur la hauteur des nervures 5 et 6 ainsi que la distance entre celles-ci, respectivement. A partir de l'extrémité supérieure des nervures 3 et 4 font saillie vers l'extérieur deux ailettes 7 et 8 qui contribuent à donner à la platine 1 une grande rigidité.

L'épaisseur de ces ailettes est sensiblement égale à la différence de hauteur entre les nervures 3, 4 et les nervures 5, 6 dans l'exemple illustré.

Sur le fond 9 de la cuvette 2 est ménagé un évidement 10. Lorsque la platine 1 est utilisée comme une surplatine, cet évidement 10 est destiné à être aligné avec la platine classique proprement dite d'un microscope (non représenté), sur laquelle la platine 1 prend appui en trois points, tels que ceux définis par les références numériques 11a, 11b et 11c : il s'agit de perçages (dont au moins les perçages 11a et 11b sont taraudés) qui permettent de régler le parallélisme de la platine 1 (de façon plus précise, le parallélisme de la plaque de verre qui sera décrite par la suite), par rapport à un plan d'appui, et ce par l'intermédiaire de vis micrométriques (non représentées).

Des perçages oblongs 12a et 12b assurent le passage de brides de verrouillage, du type à ressort, 13, susceptibles de tourner de 90° et rendues solidaires du plan d'appui précité (non représenté aux figures 1 et 2 ; les brides, non plus, n'ont pas été représentées à la figure 2) . En position de déverrouillage les brides 13 libèrent la platine 1, alors qu'en position de verrouillage ces brides permettent de fixer fermement cette platine sur la platine du microscope par interaction avec la paroi des perçages oblongs 12a et 12b: de façon plus précise, dans cette dernière position les brides permettent de plaquer, par l'intermédiaire de ressorts, la platine 1 sur les trois points de fixation précités 11a, 11b et 11c.

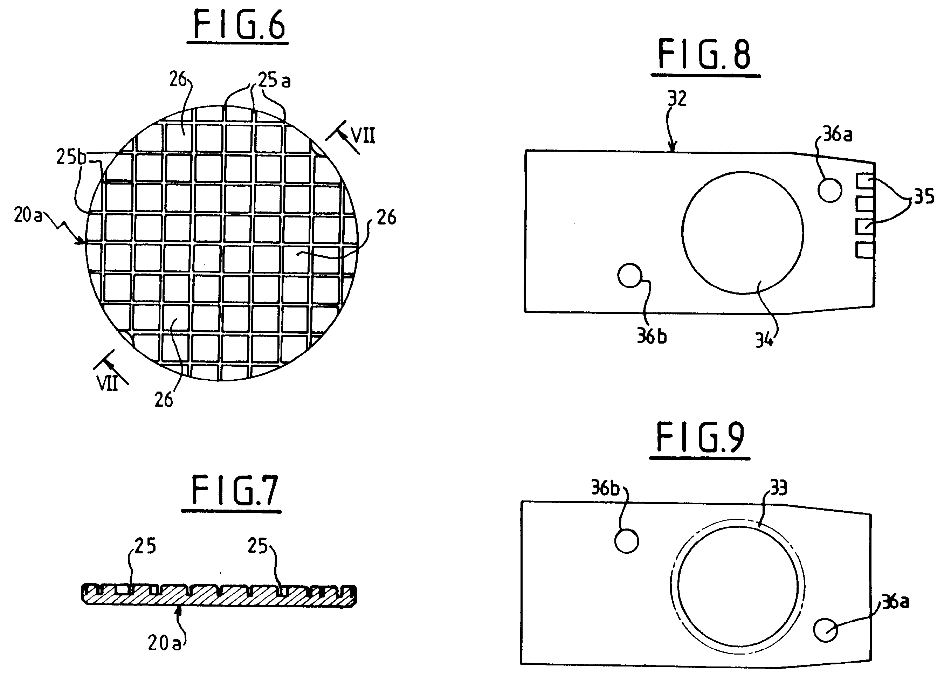

Conformément à l'invention, dans l'évidement 10 de la platine 1 est placée une plaque de verre 20 (cf la figure 3), qui vient en appui sur un siège 15 faisant saillie radialement vers le centre de l'évidement 10 à partir de la paroi 14 délimitant ce dernier et défini sur un épaulement (ou gradin) inférieur 16. Da façon plus précise, le siège est constitué par l'extrémité biseautée 16a de l'épaulement 16, sur laquelle elle est fixée par collage ou tout autre moyen, par exemple par vissage. De cette manière, entre la plaque de verre 20 et la paroi 14 de l'évidement 10 existe un espace annulaire 17 (d'environ 1 mm par exemple) destiné à être couvert par le support 27 à analyser, qui couvre de façon étanche l'espace 17 par une portion annulaire périphérique 27a dépassant l'encombrement de la plaque 20, dont la face d'observation 28 (à savoir la face sur laquelle prend appui le support 27) est alignée avec la face supérieure 29 du fond 9 de la platine 1. Cet espace 17 est donc délimité entre : une portion 30 de surface radialement externe de la plaque 20, une portion 31 de surface du siège 15 de fixation de cette plaque, la portion de paroi 14 délimitant l'évidement 10 de la platine 1 et la zone périphérique annulaire 27a du support 27 couvrant de façon étanche l'espace 17 séparant la plaque 20 de la paroi 14 de l'évidement 10.

Sur le fond 9 de la platine 1 est ménagée une rainure 18, qui est borgne à l'extrémité 19a, alors qu'elle débouche dans l'espace annulaire 17 à l'extrémité opposée 19b (sur la figure 1, la rainure est représentée comme étant dirigée suivant le prolongement d'un diamètre de l'évidement 10). Dans cette rainure 18 est ménagé un siège 21 sur lequel vient en appui une plaquette 22 de fermeture étanche de la rainure, telle que la plaquette illustrée à la figure 5, de façon à réaliser un canal étanche (bien entendu, le canal étanche peut être réalisé de manière différente). L'orifice 23, dont est pourvue cette plaquette 22, est un orifice d'aspiration destiné à être raccordé, par l'intermédiaire d'un embout d'aspiration, au dispositif de création de vide.

La plaquette d'obturation 22, est collée sur le siège 21 (toutefois, d'autres modes de fixation peuvent être envisagés, notamment le vissage à l'aide de micro-vis équipées de micro-joints d'étanchéité).

En reliant l'orifice 23, par l'intermédiaire dudit embout de raccordement au dispositif de création de vide (non représentés), il est donc possible de créer le vide dans l'espace annulaire 17 entourant la plaque de verre 20, qui est rectifiée pour assurer une très grande planéité du support 27.

L'aspiration du support, ainsi obtenue provoque son placage ferme et parfait sur la plaque de verre sous l'action de la mise sous tension permanente de la zone périphérique 27a du support 27.

L'aspiration peut s'appliquer à des supports non poreux transparents, qui peuvent ainsi constituer un remplacement avantageux de la plaque de verre 20. L'aspira-tion et le placage qui s'en suit assurent une qualité de planéité de ces supports au moins équivalente à celle de la lame de verre classique.

Moyennant un cadre amovible, de dimension intérieure équivalente à celle de la lame de verre classique, la platine peut également servir à l'observation classique. Ce cadre est destiné à obturer toutes les zones d'aspiration, à l'exclusion de la zone évidée, dans laquelle la lame de verre classique sera plaquée fermement et sans déformation. Le placage parfait du support sur la plaque de verre a également comme conséquence qu'il est possible d'effectuer l'observation du support sans lamelle couvre-objet, c'est-à-dire en évitant l'emploi d'un élément qui constitue le seul moyen connu, dans la technique antérieure, pour obtenir une planéité satisfaisante d'un support. L'absence d'une lamelle couvre-objet permet d'utiliser des objectifs de microscope à très courte distance focale et donc présentant de meilleures performances.

De plus, l'élimination des ondulations du support due à la mise sous tension, permet d'effectuer une observation directe à sec du filtre, qui présente les avantages de simplicité et rapidité évoqués plus haut.

En outre, l'excellente tension du support (réglable par variation de la dépression), et donc l'élimination des défauts de planéité, permet d'appliquer efficacement la recherche automatique par analyse d'image du meilleur focus d'observation des échantillons portés par un support, interdisant les écarts, d'ailleurs inadmissibles, signalés plus haut lorsqu'on fait recours à cette recherche automatique du focus sans avoir réglé le problème des fluctuations de planéité du support.

Par ailleurs, il est possible de tenir compte d'éventuels défauts de planéité de la plaque elle-même : à cet effet, on peut introduire dans la mémoire d'un ordinateur de pilotage, notamment de la recherche automatique du meilleur focus par analyse d'image, les défauts de la plaque suivant leur position et, au fur et à mesure de l'analyse, des corrections seront appliquées avant la saisie de l'image d'un nouveau champ.

Dans le cadre de la présente invention, il est aussi possible d'améliorer encore plus la planéité du support, par rapport à la plaque de verre sur laquelle il prend appui, en ménageant sur la face d'observation de la plaque, telle que la plaque 20a de la figure 6, une double pluralité de micro-cannelures, 25a et 25b, disposées perpendiculairement entre elles suivant un quadrillé communiquant avec l'espace annulaire 17 ainsi qu'avec la rainure et l'orifice d'aspiration 18 et 23, respectivement. De cette manière, le placage d'un support recouvrant la plaque de verre quadrillée 20a n'est pas le résultat de la seule tension du support obtenue par aspiration de la zone périphérique annulaire de celui-ci (qui recouvre l'espace annulaire d'aspiration 17 précité), mais aussi de l'aspiration et mise sous tension de tous les petits carrés internes 26 du support délimités chacun par quatre micro-cannelures 25, ce qui assure un meilleur placage du support sur la plaque de verre.

En ce qui concerne la disposition des micro-cannelures 25, celle-ci est effectuée de façon telle que le quadrillage obtenu soit cohérent avec la position des échantillons à observer sur le filtre, à savoir de façon telle que chaque échantillon soit encadré par quatre micro-cannelures, ce qui autorise l'analyse séquentielle des différents échantillons.

Il y a aussi lieu d'ajouter que la platine 1 conforme à l'invention est compatible non seulement avec l'observation en épi-fluorescence, mais également avec l'observation classique en transmission, à savoir par lumière transmise à l'aide d'un condenseur , et ce grâce à l'adoption de supports transparents conjointement avec la platine 1. Il est vrai que l'épaisseur de la plaque de verre, dont est pourvue cette platine, -de l'ordre de 2 à 3 mm-, est supérieure à celle d'une lame de verre classique et que ceci peut empêcher le condenseur d'arriver aussi près du support que dans un microscope classique ; toutefois, il y a lieu de noter qu'il existe maintenant des condenseurs à plus grande distance focale qui donnent d'excellents résultats.

Quelle que soit la technique microscopique et, partant, le microscope adopté(e), il est donc clair que celui-ci est équipé de la platine selon l'invention et qu'il coopère avec un dispositif de prises de vues permettant l'analyse (observation et dénombrement) des échantillons (cellules ou bactéries ou autres) portés par le support, ceci grâce à un logiciel d'analyse d'image dont est chargé un ordinateur de pilotage de l'observation microscopique, notamment pour la recherche automatique du focus, et du dénombrement des particules.

Le logiciel d'analyse d'image précité détermine, en fonction du niveau d'éclairage, le nombre d'objets fluorescents sur l'image visée par la caméra.

Sur la base de ce qui précède, il est clair que la présente invention permet de mettre au point un procédé original d'analyse (observation et dénombrement) d'un ou plusieurs échantillons portés par un support, à l'aide d'un microscope sur lequel est branché un dispositif de prise de vue relié à un analyseur d'image, sous le contrôle d'un ordinateur chargé d'un logiciel d'analyse d'image, qui présente la caractéristique -essentielle pour une observation et un dénombrement corrects- constituée par une opération préalable de placage du support à analyser sur la plaque portée par la platine selon l'invention, de façon à éliminer les fluctuations de planéité du support et à rendre vraiment effective notamment une recherche automatique du meilleur fos à l'aide de l'analyseur d'image précité.

Sur la base des dispositions précédentes, une manière préférée d'obtenir le placage du support consiste à aspirer au moins une zone annulaire périphérique de celui-ci en créant autour de la plaque, sur laquelle il prend appui, un espace étanche susceptible d'être mise en communication avec un dispositif d'aspiration d'au moins cette zone périphérique.

Par ailleurs, la Demanderesse a conçu un dispositif de filtration parallèle d'une pluralité d'échantillons avec un contrôle automatique du colmatage ainsi qu'avec indexation des filtres utilisés, qui fait l'objet d'une Demande de Brevet co-pendante. Les filtres chargés de plusieurs échantillons à analyser localisés dans une multiplicité de zones séparées d'un même filtre, sont susceptibles d'être analysées efficacement à l'aide de la platine et par application du procédé d'analyse conformes à l'invention.

De plus, la platine selon l'invention peut avantageusement coopérer avec un badge porte-support réalisé de préférence en une matière plastique souple, du type illustré et décrit dans la Demande de Brevet co-pendante évoquée plus haut. Pour des raisons de commodité, ce badge est illustré aussi dans les dessins accompagnant la présente description aux figures 8 et 9, où il est indiqué par la référence numérique 32.

Dans ce cas, le support à analyser est destiné à être collé au badge 32 sur une zone annulaire, indiquée par la référence 33, délimitant une ouverture circulaire 34 qui correspond à l'évidement 10 de la platine 1 selon l'invention.

Lorsqu'un tel badge est utilisé, celui-ci peut avantageusement coopérer avec un système détrompeur soit en ménageant des perforations ou des encoches de détrompage sur le badge (comme illustré par la référence 35 sur la figure 8) soit -plus simplement- en découpant ou perforant la périphérie du support à analyser. De plus, le badge peut être avantageusement centré sur la platine conforme à l'invention, notamment à l'aide de deux plots de centrage, tels que ceux qui ont été indiqués en trait mixte par les références 24a et 24b à la figure 1, destinés à coopérer avec deux perforations ou trous de centrage 36a et 36b ménagés dans le badge 32. Ce badge, ainsi centré sur la platine 1, constitue un moyen original d'indexation (ou indexage) du support et donc de l'(ou des) échantillon(s) qu'il porte et est lui aussi plaqué contre celle-ci par les moyens utilisés pour le placage du support.

La présente invention pourvoit donc à une platine qui satisfait simultanément à un double objectif, à savoir qu'elle permet de réaliser à la fois :
i) un placage parfait, ce qui est obtenu par le quadrillage de distribution -également à la face inférieure du filtre- de la dépression créée dans l'espace annulaire d'aspiration, autour de chacun des micro-carrés (ou micro-pavés) 26 du filtre dans lesquels la face d'observation (à savoir, la face principale supérieure) de la plaque d'appui 20a est subdivisée par le quadrillage de micro-cannelures, assurant ainsi, lors de l'aspiration, un meilleur placage du filtre ;
ii) une surface de référence stable dans le temps, qui soit parfaitement plane (avec une précision de 0,2 »m) et parfaitement horizontale (avec une précision de 1 à 2 »m),

tout en présentant les avantages suivants, séparément ou en combinaison :
1) une rapidité exceptionnelle dans le placage, même pour des plaques d'observation de relativement grand diamètre ;
2) un indexage automatique très précis ;
3) un focus stable, reproductible et corrigeable informatiquement ;
4) une observation soit à sec soit sous huile;
5) une double illumination : par dessus (épi-illumination) ou par dessous (trans-illumination).

Ainsi que cela ressort de ce qui précède, l'invention ne se limite nullement à ceux de ses modes de mise en oeuvre, de réalisation et d'application qui viennent d'être décrits de façon plus explicite ; elle en embrasse au contraire toutes les variantes qui peuvent venir à l'esprit du technicien en la matière, sans s'écarter du cadre, ni de la portée, de la présente invention. En particulier, il est un clair que l'espace étanche d'aspiration créé autour de la plaque de verre, en correspondance d'au moins la zone périphérique annulaire du support à analyser, peut être mis en communication avec le dispositif de création de vide, non seulement par une rainure unique, telle que la rainure 18 précitée, mais aussi par tous autres moyens équivalents, par exemple par une pluralité de rainures étanches disposées en étoile autour de l'évidement dont est pourvu la platine selon l'invention ou par un verre poreux.

Le verre lui-même peut être remplacé par des matériaux différents, comme des matériaux métalliques ou synthétiques (matières plastiques), ce qui est avantageux pour l'analyse en épi-fluorescence, c'est-à-dire ne nécessitant pas un éclairage transmis par un condenseur.

Lorsqu'on utilise une plaque poreuse, celle-ci peut être poreuse dans toutes sa masse ou uniquement dans une portion périphérique annulaire, correspondant à une zone périphérique annulaire du support, appliquée sur la plaque d'observation, l'aspiration du support se faisant par création de vide à l'aide d'un dispositif approprié communiquant avec cette zone périphérique du support.

De même il est possible de créer l'aspiration (et donc de plaquer) au moins une zone périphérique annulaire d'un support à analyser à l'aide d'un dispositif de création d'un champ électromagnétique agissant sur au moins cette zone périphérique du support, notamment équipée de (ou réalisée en) une bande annulaire en matériau ferromagnétique susceptible d'être aimantée et donc d'être "aspirée" (attirée) par le champ magnétique.

Dans chaque cas, l'aspiration notamment de la zone périphérique du support à analyser soumet celui-i à une tension périphérique permanente qui rend efficace le placage du support sur la plaque d'observation.

Il y a aussi lieu de remarquer que la plaque d'observation peut être constituée même par une lame d'observation classique. Dans ce cas, (cette disposition n'est pas illustrée aux dessins) la platine conforme à l'invention est avantageusement équipée d'un film étanche, qui est pourvu d'une fenêtre d'observation centrale, destinée à être centrée par rapport à l'évidement (10) précité de la platine, tout en étant plus petite que cet évidement (10), ladite lame d'observation étant fixée sur une zone annulaire du film qui délimite centralement la fenêtre d'observation de celui-ci, en sorte que la lame précitée est plaquée contre la plaque lors de l'application de l'aspiration.

En outre, il est aussi avantageux, pour que le placage soit encore plus efficace, de réaliser les micro-cannelures du quadrillage de distribution de l'aspiration à la face principale inférieure du support avec des arêtes arrondies, de même qu'avec une section transversale à profil également arrondi.

De plus, il doit être bien entendu que, lorsque la platine conforme à l'invention est utilisée comme surplatine destinée à être montée sur une platine de microscope, classique ou non (au lieu d'être utilisée en remplacement d'une platine de microscope, classique ou non), elle est dépourvue de tout degré de liberté en elle-même (bien que la platine qui la porte soit motorisée et susceptible d'effectuer des déplacements en X, Y et Z), tout en pouvant être amovible.

Il est en outre très avantageux de faire coopérer un microscope équipé de la platine selon l'invention avec un système de focalisation automatique par analyse vidéo d'image piloté par ordinateur, permettant d'effectuer une mise en mémoire des défauts de planéité du support par détection des altitudes réelles de la surface d'observation de celui-ci par rapport à un plan de référence, en sorte qu'à chaque déplacement le système va lui-même "se corriger" automatiquement en altitude (sous le contrôle d'un programme approprié) pour s'adapter aux légères et aléatoires variations d'altitude.

## Revendications

1. Platine de fixation d'au moins un support (27), poreux ou non, souple ou rigide, porteur d'un ou plusieurs échantillons, biologiques ou non, à observer et à analyser à l'aide d'un microscope, cette platine comportant un évidement (10) destiné à recevoir une plaque (20; 20a) d'appui du support (27), et donc d'observation des échantillons portés par celui-ci, ainsi que des moyens de placage par aspiration du support (27) sur la plaque d'appui (20; 20a), laquelle platine est caractérisée en ce qu'elle comporte en outre des moyens d'indexation automatique du support (27), et donc desdits échantillons à analyser, destiné à coopérer avec un badge (32) qui comporte une ouverture (34) correspondant à l'évidement (10) de la platine (1) ainsi que des moyens permettant le centrage -à savoir l'indexation en position- du badge (32) sur la platine (1), ledit support (27) étant destiné à être fixé à une des faces principales du badge (32) sur une zone annulaire de celui-ci délimitant l'ouverture (34) précitée.

2. Platine selon la revendication 1, caractérisée en ce que les moyens d'indexation en position du badge (32) comportent au moins deux perforations (36a, 36b) destinées à recevoir deux plots de centrage correspondants (24a, 24b) portés par la platine (1).

3. Platine selon l'une quelconque des revendications 1 ou 2, caractérisée en ce que lesdits moyens de placage du support (27) sur la plaque d'observation (20) comprennent, en combinaison :
- un espace annulaire étanche (17) ménagé au moins autour de la plaque (20) et délimité entre cette plaque, la platine (1) et au moins une portion périphérique annulaire (27a) du support (27) dépassant l'encombrement de la plaque (20) ;
- un dispositif d'attraction d'au moins ladite zone périphérique (27a) du support à analyser (27) par création d'un champ électromagnétique susceptible d'aimanter au moins ladite portion périphérique annulaire (27a) du support (27), qui est notamment équipée de ou réalisée en une bande annulaire en matériau ferromagnétique.

4. Platine selon l'une quelconque des revendications 1 ou 2, caractérisée en ce que les moyens de placage du support (27) comprennent :
- un dispositif d'aspiration d'au moins une zone périphérique annulaire du support à analyser (27) par création de vide, qui est en communication avec ladite zone périphérique du support, la plaque d'observation (20) étant poreuse dans au moins une portion correspondant à cette zone périphérique, ladite zone périphérique du support étant appliquée sur la plaque d'observation.

5. Platine selon l'une quelconque des revendications 1 ou 2, comportant des moyens de placage du support (27) sur la plaque d'appui (20) qui comprennent, en combinaison :
- un espace annulaire étanche (17) ménagé au moins autour de la plaque (20) et délimité entre cette plaque, la platine (1) et au moins une portion périphérique annulaire (27a) du support (27) dépassant l'encombrement de la plaque (20),
- un dispositif d'aspiration d'au moins ladite portion périphérique annulaire (27a) du support à analyser (27), par création de vide,
- au moins un canal étanche (18), ménagé dans la platine (1) et mettant en communication l'espace étanche d'aspiration (17) avec le dispositif de création de vide,
caractérisée en ce que la plaque (20) est fixée à une extrémité (16a) radialement interne d'un siège annulaire (15) faisant saillie d'une portion de paroi (14) délimitant l'évidement (10) de la platine (1), la face d'observation (28) de la plaque (20) sur laquelle prend appui le support (27) étant sensiblement au même niveau que la face supérieure (29) de la platine (1), lorsque cette plaque est disposée dans l'évidement précité (10), ladite plaque (20) présentant une portion de surface radialement externe (30) espacée de la paroi de l'évidement (10) par ledit siège (15), en sorte que l'espace étanche d'aspiration (17) est délimité entre : cette portion (30) de surface radialement externe de la plaque (20), une portion de surface (31) du siège (15) de fixation de la plaque (20), ladite portion de paroi (14) délimitant l'évidement (10) de la platine (1) et ladite portion périphérique annulaire (27a) du support (27) couvrant de façon étanche l'espace (17) séparant la plaque (20) de la paroi (14) de l'évidement (10) de la platine (1), le canal reliant l'espace étanche (17) d'aspiration d'au moins la portion périphérique annulaire (27a) du support (27) au dispositif de création de vide étant constitué par au moins une rainure borgne (18), qui est ménagée dans la platine (1) et qui comporte un siège (21) d'application d'une plaquette d'obturation étanche (22) pourvue d'un orifice d'aspiration (23) destiné à être raccordé au dispositif de création de vide précité.

6. Platine selon l'une quelconque des revendications 3 ou 4, caractérisée en ce que la plaque (20) est fixée à une extrémité (16a) radialement interne d'un siège annulaire (15) faisant saillie d'une portion de paroi (14) délimitant l'évidement (10) de la platine (1), la face d'observation (28) de la plaque (20) sur laquelle prend appui le support (27) étant sensiblement au même niveau que la face supérieure (29) de la platine (1), lorsque cette plaque est disposée dans l'évidement précité (10), ladite plaque (20) présentant une portion de surface radialement externe (30) espacée de la paroi de l'évidement (10) par ledit siège (15), en sorte que l'espace étanche d'aspiration (17) est délimité entre : cette portion (30) de surface radialement externe de la plaque (20), une portion de surface (31) du siège (15) de fixation de la plaque (20), ladite portion de paroi (14) délimitant l'évidement (10) de la platine (1) et ladite portion périphérique annulaire (27a) du support (27) couvrant de façon étanche l'espace (17) séparant la plaque (20) de la paroi (14) de l'évidement (10) de la platine (1), le canal reliant l'espace étanche (17) d'aspiration d'au moins la portion périphérique annulaire (27a) du support (27) au dispositif de création de vide étant constitué par au moins une rainure borgne (18), qui est ménagée dans la platine (1) et qui comporte un siège (21) d'application d'une plaquette d'obturation étanche (22) pourvue d'un orifice d'aspiration (23) destiné à être raccordé au dispositif d'aspiration précité.

7. Platine selon l'une quelconque des revendications 5 ou 6, caractérisée en ce que la plaque d'appui (20a) comporte sur sa surface d'observation (28) des micro-cannelures (25a, 25b) disposées de façon à former un quadrillage de distribution -également à la face inférieure du support (27)- de la dépression créée dans l'espace d'aspiration précité (17), autour de chacun des micro-carrés (ou micro-pavés 26) du support (27), dans lesquels la face d'observation (à savoir, la face principale supérieure) de la plaque d'appui (20a) est subdivisée par le quadrillage de micro-cannelures (25a, 25b), assurant ainsi, lors de l'aspiration, un encore meilleur placage du support (27).

8. Platine selon l'une quelconque des revendications 1 à 7, caractérisée en ce qu'elle se présente sous la forme d'une cuvette (2).

9. Platine selon la revendication 8, caractérisée en ce que la cuvette (2) est sensiblement rectangulaire et est délimitée par des nervures transversales (3, 4) et longitudinales (5, 6), et en ce que les nervures transversales sont équipées d'ailettes de renforcement (8) permettant également de faire coopérer la platine avec des moyens de fixation de celle-ci sur un plan d'appui.

10. Platine selon l'une quelconque des revendications 1 à 9, caractérisée en ce que la plaque d'observation est réalisée en un matériau choisi dans le groupe comprenant des matériaux en verre, en métal ou en matière plastique.

11. Platine de fixation selon la revendication 1, caractérisée en ce que les moyens de placage par aspiration comprennent un film étanche, qui est pourvu d'une fenêtre d'observation centrale, destinée à être centrée par rapport à l'évidement (10) précité de la platine, tout en étant plus petite que cet évidement (10), ladite lame d'observation étant fixée sur une zone annulaire du film qui délimite centralement la fenêtre d'observation de celui-ci, en sorte que la lame précitée est plaquée contre la platine lors de l'application de l'aspiration.

12. Utilisation de la platine selon l'un quelconque des revendications 1 à 11, comme surplatine destinée à être montée sur une platine de microscope, classique ou non.

13. Utilisation de la platine selon l'une quelconque des revendications 1 à 11 en remplacement d'une platine de microscope, classique ou non.

14. Microscope équipé d'une platine selon l'une quelconque des revendications 1 à 13.

15. Microscope selon la revendication 14, caractérisé en ce qu'il coopère avec un système de focalisation automatique par analyse vidéo d'image, piloté par ordinateur.

## Patentansprüche

1. Platine zur Befestigung mindestens eines nichtporösen oder porösen, biegsamen oder starren Trägers (27), der eine oder mehrere nichtbiologische oder biologische Proben trägt, die mit einem Mikroskop betrachtet und analysiert werden sollen, wobei diese Platine eine Aussparung (10) aufweist, die eine Auflageplatte (20; 20a) für den Träger (27) aufnehmen soll, die somit zur Betrachtung der von diesem getragenen Proben dient, sowie Vorrichtungen zum Andrücken des Trägers (27) durch Ansaugen auf der Auflageplatte (20; 20a), wobei diese Platine dadurch gekennzeichnet ist, daß sie außerdem Vorrichtungen zur automatischen Ausrichtung des Trägers (27) und somit der zu analysierenden Proben aufweist, die mit einer Auflage (32) zusammenwirken sollen, die eine Öffnung (34) aufweist, welche der Aussparung (10) der Platine (1) entspricht, sowie Vorrichtungen zum Zentrieren - d.h. zur Positionsausrichtung - der Auflage (32) auf der Platine (1), wobei der Träger (27) vorgesehen ist, an einer der Hauptseiten der Auflage (32) auf einem ringförmigen Bereich derselben befestigt zu werden, der die vorgenannte Öffnung (34) begrenzt.

2. Platine nach Anspruch 1, dadurch gekennzeichnet, daß die Vorrichtungen zur Positionsausrichtung der Auflage (32) mindestens zwei Bohrungen (36a, 36b) umfassen, die dazu bestimmt sind, zwei entsprechende, von der Platine (1) getragene Zentrierstifte (24a, 24b) aufzunehmen.

3. Platine nach einem der Ansprüche 1 oder 2, dadurch gekennzeichnet, daß die Vorrichtungen zum Andrücken des Trägers (27) an die Betrachtungsplatte (20) kombiniert umfassen:
- einen dicht abgeschlossenen, ringförmigen Raum (17), der mindestens um die Platte (20) herum vorgesehen ist und von dieser Platte, der Platine (1)und mindestens einem die Abmessungen der Platte (20) übersteigenden, ringförmigen Randbereich (27a) des Trägers (27) begrenzt wird;
- eine Vorrichtung zum Anziehen mindestens des genannten Randbereichs (27a) des zu analysierenden Trägers (27) durch Schaffung eines elektromagnetischen Felds, das geeignet ist, mindestens den genannten ringförmigen Randbereich (27a) des Trägers (27) zu magnetisieren, der vor allem mit einem ringförmigen Streifen aus ferromagnetischem Material versehen ist oder daraus besteht.

4. Platine nach einem der Ansprüche 1 oder 2, dadurch gekennzeichnet, daß die Vorrichtungen zum Andrücken des Trägers (27) umfassen:
- eine Ansaugvorrichtung für mindestens einen ringförmigen Randbereich des zu analysierenden Trägers (27) durch Schaffung eines Vakuums, die mit dem genannten Randbereich des Trägers verbunden ist, wobei die Betrachtungsplatte (20) in mindestens einem diesem Randbereich entsprechenden Bereich porös ist und dieser Randbereich des Trägers auf die Betrachtungsplatte aufgelegt wird.

5. Platine nach einem der Ansprüche 1 oder 2, die Vorrichtungen zum Andrücken des Trägers (27) auf die Auflageplatte (20) aufweist, die kombiniert umfassen:
- einen dichten ringförmigen Raum (17), der mindestens um die Platte (20) herum vorgesehen ist und von dieser Platte, der Platine (1) und mindestens einem ringförmigen Randbereich (27a) des Trägers (27) begrenzt wird, der die Abmessungen der Platte (20) übersteigt;
- eine Vorrichtung zum Ansaugen mindestens des genannten Randbereichs (27a) des zu analysierenden Trägers (27) durch Schaffung eines Vakuums,
- mindestens einen in der Platine (1) vorgesehenen, dicht abgeschlossenen Kanal (18), der den dichten Ansaugraum (17) mit der Vorrichtung zur Schaffung des Vakuums verbindet,
dadurch gekennzeichnet, daß die Platte (20) an einem radial inneren Ende (16a) eines ringförmigen Sitzes (15) befestigt ist, der um einen Wandabschnitt (14) übersteht, der die Aussparung (10) der Platine (1) begrenzt, wobei sich die Betrachtungsseite (28) der Platte (20), auf welcher der Träger (27) aufliegt, im wesentlichen auf gleicher Höhe wie die Oberseite (29) der Platine (1) befindet, wenn diese Platte in der vorgenannten Aussparung (10) angeordnet ist, und diese Platte (20) einen radial äußeren Flächenabschnitt (30) aufweist, der von der Wand der Aussparung (10) durch den genannten Sitz (15) beabstandet ist, so daß der dichte Ansaugraum (17) zwischen diesem radial äußeren Flächenabschnitt (30) der Platte (20), einem Flächenabschnitt (31) des Befestigungssitzes (15) der Platte (20), dem Wandabschnitt (14), der die Aussparung (10) der Platine (1) begrenzt, und dem genannten ringförmigen Randbereich (27a) des Trägers (27) gebildet wird, der dicht abschließend den Raum (17) bedeckt, welcher die Platte (20) von der Wand (14) der Aussparung (10) der Platine (1) trennt, wobei der Kanal, der den dichten Ansaugraum (17) mindestens des ringförmigen Randbereichs (27a) des Trägers (27) mit der Vorrichtung zur Schaffung eines Vakuums verbindet, von mindestens einer Blindrille (18) gebildet wird, die in der Platine (1) vorgesehen ist und einen Andrücksitz (21) für eine dichte, mit einer Ansaugöffnung (23) versehene Verschlußplatte (22) umfaßt, die an die Vorrichtung zur Schaffung eines Vakuums angeschlossen werden soll.

6. Platine nach einem der Ansprüche 3 oder 4, dadurch gekennzeichnet, daß die Platte (20) an einem radial inneren Ende (16a) eines ringförmigen Sitzes (15) befestigt ist, der um einen Wandabschnitt (14) übersteht, der die Aussparung (10) der Platine (1) begrenzt, wobei sich die Betrachtungsseite (28) der Platte (20), auf welcher der Träger (27) aufliegt, im wesentlichen auf gleicher Höhe wie die Oberseite (29) der Platine (1) befindet, wenn diese Platte in der vorgenannten Aussparung (10) angeordnet ist, und diese Platte (20) einen radial äußeren Flächenabschnitt (30) aufweist, der von der Wand der Aussparung (10) durch den genannten Sitz (15) beabstandet ist, so daß der dichte Ansaugraum (17) zwischen diesem radial äußeren Flächenabschnitt (30) der Platte (20), einem Flächenabschnitt (31) des Befestigungssitzes (15) der Platte (20), dem Wandabschnitt (14), der die Aussparung (10) der Platine (1) begrenzt, und dem genannten ringförmigen Randbereich (27a) des Trägers (27) gebildet wird, der dicht abschließend den Raum (17) bedeckt, der die Platte (20) von der Wand (14) der Aussparung (10) der Platine (1) trennt, wobei der Kanal, der den dichten Ansaugraum (17) mindestens des ringförmigen Randbereichs (27a) des Trägers (27) mit der Vorrichtung zur Schaffung eines Vakuums verbindet, von mindestens einer Blindrille (18) gebildet wird, die in der Platine (1) vorgesehen ist und einen Andrücksitz (21) für eine dichte, mit einer Ansaugöffnung (23) versehene Verschlußplatte (22) umfaßt, die an die Ansaugvorrichtung angeschlossen werden soll.

7. Platine nach einem der Ansprüche 5 oder 6, dadurch gekennzeichnet, daß die Auflageplatte (20a) auf ihrer Betrachtungsseite Mikrorillen (25a, 25b) aufweist, die so angeordnet sind, daß sie - ebenso an der Unterseite des Trägers (27) - ein Verteilgitter für den in dem vorgenannten Ansaugraum (17) geschaffenen Unterdruck bilden, und zwar um jedes Mikroquadrat (oder jedes Mikro"pflaster") (26) des Trägers (27) herum, bei denen die Betrachtungsseite (d.h. die oben gelegene Hauptseite) der Auflageplatte (20a) durch das Gitter von Mikrorillen (25a, 25b) unterteilt ist, wodurch der Träger (27) beim Ansaugen noch fester angedrückt wird.

8. Platine nach einem der Ansprüche 1 bis 7, dadurch gekennzeichnet, daß sie die Form einer Schale (2) hat.

9. Platine nach Anspruch 8, dadurch gekennzeichnet, daß die Schale (2) im wesentlichen rechteckig ist und von Quer- (3, 4) und Längsrippen (5, 6) begrenzt wird, sowie dadurch, daß die Querrippen mit Verstärkungsflügeln (8) versehen sind, wodurch auch gewährleistet ist, daß die Platine mit Befestigungsvorrichtungen derselben auf einer Auflagefläche zusammenwirken kann.

10. Platine nach einem der Ansprüche 1 bis 9, dadurch gekennzeichnet, daß die Betrachtungsplatte aus einem Material besteht, das aus der Gruppe von Materialien aus Glas, Metall oder Kunststoff gewählt wurde.

11. Befestigungsplatine nach Anspruch 1, dadurch gekennzeichnet, daß die Vorrichtungen zum Andrücken durch Ansaugen einen dichten Film umfassen, der ein in der Mitte angeordnetes Betrachtungsfenster aufweist, das bezüglich der vorgenannten Aussparung (10) der Platine zentriert werden soll, dabei jedoch kleiner als diese Aussparung (10) ist, wobei die genannte Betrachtungsplatte auf einem ringförmigen Bereich des Films befestigt ist, der zentral dessen Betrachtungsfenster begrenzt, so daß die vorgenannte Platte beim Ansaugen an die Platine gedrückt wird.

12. Verwendung der Platine nach einem der Ansprüche 1 bis 11 als Oberplatine, die dazu vorgesehen ist, auf eine nichtherkömmliche oder herkömmliche Mikroskopplatine montiert zu werden.

13. Verwendung der Platine nach einem der Ansprüche 1 bis 11 als Ersatz für eine nichtherkömmliche oder herkömmliche Mikroskopplatine.

14. Mikroskop, das mit einer Platine nach einem der Ansprüche 1 bis 13 ausgestattet ist.

15. Mikroskop nach Anspruch 14, dadurch gekennzeichnet, daß es mit einem automatischen Fokussierungssystem durch computergesteuerte Videobildanalyse zusammenwirkt.

## Claims

1. A stage for fixing at least one porous or non-porous medium (27) that is flexible or rigid, and that carries one or more samples which are biological or otherwise, to be observed and to be analyzed by means of a microscope, the stage including a hole (10) for receiving a plate (20; 20a) for supporting the medium (27), and thus for enabling the samples carried thereby to be observed, together with means for pressing the medium (27) against the support plate (20, 20a) by suction, which stage is characterized in that it further includes means for automatically indexing the medium (27) and thus said samples to be analyzed, said means being designed to co-operate with a card (32) including an opening (34) corresponding to the hole (10) through the stage (1) together with centering means, i.e. position indexing means, for the card (32) on the stage (1), said medium (27) being designed to be fixed to one of the main faces of the card (32) over an annular zone thereof delimiting the above-mentioned opening (34).

2. A stage according to claim 1, characterized in that the means for indexing the position of the card (32) include at least two perforations (36a, 36b) for receiving two corresponding centering studs (24a, 24b) carried by the stage (1).

3. A stage according to claim 1 or 2, characterized in that said means for pressing the medium (27) against the observation plate (20) comprise, in combination:
an airtight annular gap (17) provided at least around the plate (20) and delimited between said plate, the stage (1), and at least an annular peripheral portion (27a) of the medium (27) projecting beyond the plate (20); and
a device for applying suction to at least said peripheral zone (27a) of the medium (27) to be analyzed by establishing an electromagnetic field suitable for magnetizing at least said annular peripheral portion (27a) of the medium (27), which is fitted with or made of an annular band of ferromagnetic material.

4. A stage according to claim 1 or 2, characterized in that the means for pressing down the medium (27) comprise:
a device for applying suction to at least an annular peripheral zone of the medium (27) to be analyzed by establishing a vacuum, which device is in communication with said peripheral zone of the medium, the observation plate (20) being porous at least in a portion corresponding to said peripheral zone, said peripheral zone of the medium being pressed against the observation plate.

5. A stage according to claim 1 or 2, including means for pressing the medium (27) against the support plate (20) and comprising, in combination:
an airtight annular gap (17) provided at least around the plate (20) and delimited between said plate, the stage (1), and at least an annular peripheral portion (27a) of the medium (27) projecting beyond the plate (20);
a device for applying suction to at least said annular peripheral portion (27a) of the medium (27) to be analyzed, by creating a vacuum;
at least one airtight channel (18) provided in the stage (1) and putting the airtight suction gap (17) into communication with the device for creating a vacuum;
the stage being characterized in that the plate (20) is fixed to a radially inner end (16a) of an annular seat (15) projecting from a portion of the wall (14) delimiting the hole (10) through the stage (1), the observation face (28) of the plate (20) against which the medium (27) is pressed being at substantially the same level as the top face (29) of the stage (1) when said plate is disposed in said hole (10), said plate (20) having a radially outer surface portion (20) spaced apart from the wall of the hole (10) by said seat (15) such that the airtight suction gap (17) is delimited between: said radially outer surface portion (30) of the plate (20), a surface portion (31) of the seat (15) on which the plate (20) is fixed, said portion of the wall (14) delimiting the hole (10) through the stage (1), and said annular peripheral portion (27a) of the medium (27) overlying in airtight manner the gap (17) between the plate (20) and the wall (14) of the hole (10) through the stage (1), the channel connecting the device for creating a vacuum to the airtight gap (17) for applying suction to at least the annular peripheral portion (27a) of the medium (27) being constituted by at least one blind groove (18) formed in the stage (1) and including a seat (21) for receiving an airtight closure strip (22) provided with a suction orifice (23) for coupling to the above-mentioned device for creating a vacuum.

6. A stage according to claim 3 or 4, characterized in that the plate (20) is fixed to a radially inner end (16a) of an annular seat (15) projecting from a wall portion (14) delimiting the hole (10) through the stage (1), the observation face (28) of the plate (20) against which the medium (27) is pressed being at substantially the same level as the top face (29) of the stage (1) when said plate is disposed in the above-mentioned hole (10), said plate (20) having a radially outer surface portion (30) spaced apart from the wall of the hole (10) by said seat (15) in such a manner that the airtight suction gap (17) is delimited between: said radially outer surface portion (30) of the plate (20), a surface portion (31) of the seat (15) on which the plate (20) is fixed, said portion of the wall (14) delimiting the hole (10) through the stage (1), and said annular peripheral portion (27a) of the medium (27) overlying in airtight manner the gap (17) between the plate (20) and the wall (14) of the hole (10) through the stage (1), the channel connecting the device for creating a vacuum to the airtight gap (17) for applying suction to at least the annular peripheral portion (27a) of the medium (27) being constituted by at least one blind groove (18) formed in the stage (1) and including a seat (21) for receiving an airtight closure strip (22) provided with a suction orifice (23) for coupling to the above-mentioned device for creating a vacuum.

7. A stage according to claim 5 or 6, characterized in that the support plate (28) includes a grid of microgrooves (25a, 25b) disposed in its observation surface (28) in such a manner as to distribute the suction created in the above-mentioned suction gap (17) also to the bottom face of the medium (27) around each of the microsquares (or micropanes 26) in the medium (27), with the observation face of the support plate (20a), i.e. its top main face, being subdivided by the grid of microgrooves (25a, 25b) into corresponding microsquares or micropanes, thereby pressing down the medium (27) even better during suction.

8. A stage according to any one of claims 1 to 7, characterized in that it is in the form of a trough (2).

9. A stage according to claim 8, characterized in that the trough (2) is substantially rectangular and is delimited by transverse ribs (3, 4) and longitudinal ribs (5, 6), and in that the transverse ribs are fitted with reinforcing fins (8) also serving to enable the stage to co-operate with means for fixing the stage on a support plane.

10. A stage according to any one of claims 1 to 9, characterized in that the observation plate is made of a material selected from the group comprising: glass materials, metal materials, and plastics materials.

11. A fixing stage according to claim 1, characterized in that the means for pressing down the medium by suction comprise an airtight film which is provided with a central observation window for centering relative to the above-mentioned hole (10) through the stage, while being smaller than said hole (10), said observation slide being fixed to an annular zone of the film which centrally delimits the observation window thereof, such that the above-mentioned slide is pressed against the stage when suction is applied.

12. The use of the stage according to any one of claims 1 to 11, as an over-stage for mounting on a microscope stage, which may be conventional or otherwise.

13. The use of the stage according to any one of claims 1 to 11, as a replacement for a microscope stage, which may be conventional or otherwise.

14. A microscope fitted with a stage according to any one of claims 1 to 13.

15. A microscope according to claim 14, characterized in that it co-operates with a computer controlled system for automatic focusing by analyzing a video image.
